# EUROPEAN PATENT SPECIFICATION

(11) **EP 2 568 413 B1**
(45) Date of publication and mention of the grant of the patent: **22.10.2014**
(21) Application number: 11007246.9
(22) Date of filing: 07.09.2011
(51) Int. Cl.: G06K 9/00, B60Q 9/00, B60Q 1/24, B60Q 1/08

(54) **Driver assisting system and method for a motor vehicle**
Fahrerassistenzsystem und -verfahren für ein Kraftfahrzeug
Système d'assistance au conducteur et procédé pour véhicule à moteur

(43) Date of publication of application: 13.03.2013
(60) Divisional application: 13193103.2
(73) Proprietor: Autoliv Development AB, 447 83 Vårgårda (SE)
(72) Inventor: Hedberg, Ognjan, 58222 Linköping (SE)
(74) Representative: Müller Verweyen

(56) References cited:
- DE-A1- 10 060 734
- JP-A- 2006 185 410
- KASAI Y ET AL: "Study on spot lamps for early detection of pedestrians and obstacles", V.I.S.I.O.N : VEHICLE AND INFRASTRUCTURE SAFETY IMPROVEMENT IN ADVERSE CONDITIONS AND NIGHT DRIVING ; OCTOBER 6 - 7, 2010, VERSAILLES, SATORY, FRANCE ; PROCEEDINGS ; INTERNATIONAL CONFERENCE AND EXHIBITION /, SIA, SOCIÉTÉ DES INGÉNIEURS DE L'AUTOMOBI, 6 October 2010 (2010-10-06), pages 1-7, XP008149702,
- HORTER M H ET AL: "A hardware and software framework for automotive intelligent lighting", INTELLIGENT VEHICLES SYMPOSIUM, 2009 IEEE, IEEE, PISCATAWAY, NJ, USA, 3 June 2009 (2009-06-03), pages 299-304, XP031489857, ISBN: 978-1-4244-3503-6
- WEGWERTH C ET AL: "Active Safety Light", V.I.S.I.O.N, XX, XX, 1 January 2008 (2008-01-01), pages 1-6, XP008149637,

## Description

The invention relates to a driver assisting system for a motor vehicle, comprising an imaging means adapted to capture images from a region surrounding the motor vehicle, a processing means adapted to process image data provided by said imaging means and to detect objects in said vehicle surrounding region, and a light source arrangement comprising a light source for generating an optical figure in the vehicle surrounding region through a light beam and being controllable by said electronic control means to change the direction and/or shape of said light beam. Furthermore, the invention relates to a corresponding driver assisting method.

US 6 281 806 B1 discloses a vision enhancement system where a processor determines whether a particular object sensed in or near the current path of the vehicle requires alerting of the driver. If so, the processor outputs a control signal to effect illumination of the sensed object. The source of illumination is controlled so as to continuously direct light onto the identified object, even as the vehicle and/or object move simultaneously with respect to one another. However, misalignments between the imaging means and the source of illumination may occur reducing the system performance or, in the worst case, failing to direct the driver attention to the correct position.

This is also known from KASAI Y ET AL: "Study on spot lamps for early detection of pedestrians and obstacles", V.I.S.I.O.N : VEHICLE AND INFRASTRUCTURE SAFETY IMPROVEMENT IN ADVERSE CONDITIONS AND NIGHT DRIVING ; OCTOBER 6 - 7, 2010, VERSAILLES, SATORY, FRANCE ; PROCEEDINGS; INTERNATIONAL CONFERENCE AND EXHIBITION /, SIA, SOCIETE DES INGENIEURS DE L'AUTOMOBILE

The object of the invention is to provide a driver assisting system and method having a high system performance.

The invention solves this object with the features of the independent claims. According to the invention an offset between the position of the optical figure and the reference position is determined. Since the light source has been controlled to illuminate the reference position before, this corresponds to determining an offset of the light source from a set position. In this manner, misalignments between the imaging means and the light source can be determined effectively. An essential point of the invention is to control the light source in order to illuminate the reference position before determining the offset. In this manner several sources of systematic error can be eliminated. The accuracy of the illumination of the detected objects is much higher, leading to a higher recognition probability of the object by driver and/or by the object detection means. Therefore, the driver assisting system performance is increased and the confidence of the driver in the system is large.

The invention advantageously enables to compensate for misalignments between the imaging means and the light source. Preferably, a compensation of the vehicle motion and/or the predicted object motion is taken into account prior to the determination of the offset between the imaging means and the light source. Vehicle yaw rate and speed measured by separate sensors are preferably used to improve system performance since there is a latency between the signal of the detected object in frame N and the illuminated object in frame N+m. The light source is controlled so as to continuously direct light onto the reference position, even as the vehicle and/or the reference position move simultaneously with respect to one another.

The reference position is preferably related to the position of a detected object. In particular, the reference position corresponds to the position of a detected object, preferably a detected object to be illuminated by the light source arrangement in order to avoid a collision, like pedestrians, vehicles and/or traffic signs. Preferably a static object like a speed sign may be used as defining the reference position in order not to have to compensate for the object motion. Typically the reference position may be the center of an object bounding box of the detected object.

Preferably the processing means is adapted to find a modeled light distribution or brightness distribution. The light distribution is preferably two-dimensional and may be a normal distribution. The modeled light distribution preferably has independent standard deviations in two perpendicular directions. Preferably the modeled light distribution has a predetermined form or shape. A typical light distribution may be oval or elliptical. The parameters of the light distribution may be varied within reasonable predetermined ranges.

The model distribution is preferably searched in the captured images only in a pre-defined search region around the reference position, because a large deviation of the light figure from the reference position is unlikely. Expediently, the search region is significantly smaller than the area of the captured images. For example, the area of the search region may be less than 20%, preferably less than 10% of the area of the captured images. This saves a lot of processing time.

In a preferred embodiment the processing means is adapted to extract characteristic properties of the optical figure, or of the modeled light distribution representing the optical figure. In particular the center of a detected light figure or light distribution is preferably extracted. The offset according to the invention can then be determined as the deviation of the light distribution center to the reference position.

It may be useful to extract other characteristic properties of a detected optical figure, or of a modeled light distribution representing the optical figure. This allows to perform a verification that a determined optical figure originates from the vehicle light source, by proving whether said extracted characteristic properties fulfill predetermined conditions. Such verification may be advantageous because in the region surrounding a motor vehicle multiple other light sources from other vehicles or buildings may occur which could otherwise lead to false determinations of light figures.

Preferably the characteristic properties comprise at least one spatial property of said optical figure, preferably two spatial properties in two dimensions, for example the width, length and/or height of the optical figure. For example, at least one standard deviation of a modeled light distribution found in the acquired images may be extracted. Preferably the characteristic properties comprise two perpendicular spatial extensions of said optical figure. This allows to calculate an aspect ratio which may be constant independent from the distance of the optical figure. Other characteristic properties comprise the shape of the optical figure, which for example may be oval, and/or the distance between the optical figure and the reference position. If this distance exceeds a predetermined threshold, it is unlikely that the determined optical figure originates from the own vehicle light source. According to embodiments of the invention, the processing means may be adapted to control the light source in order to impose a temporal variation and/or a characteristic movement of said light beam. This leads to a kind of characteristic "fingerprint" of the optical figure which can easily and reliably be detected by the image processing means. In this manner a detected optical figure can be easily and reliably verified as generated by the vehicle light source. In particular in case of a visible light beam the temporal variation and/or a characteristic movement are so short or small that they are not perceivable by the driver and do not disturb him. For example, the light beam may be shut off for one or more very short periods of time well below 1 second, preferably below 0.5 s.

In the following the invention shall be illustrated on the basis of preferred embodiments with reference to the accompanying drawings, wherein:
- Fig. 1: shows a schematic diagram of a driver assisting system for a motor vehicle;
- Fig. 2: shows an example of a scene in front of a motor vehicle; and
- Fig. 3: shows a schematic diagram of a driver assisting system for a motor vehicle according to another embodiment.

A driver assisting system 10 is mounted in a motor vehicle and comprises an imaging means 11 for detecting images of a region surrounding the motor vehicle, for example a region in front of the motor vehicle. Preferably the imaging means 11 is an infrared device and more preferably comprises one or more optical and/or infrared imaging devices, in particular cameras 12a, 12b, where infrared covers near IR with wavelengths below 5 microns and/or far IR with wavelengths beyond 5 microns. Preferably the imaging means 11 comprises two cameras 12a, 12b forming a stereo imaging means 11; alternatively only one camera forming a mono imaging means can be used. Each camera 12a, 12b is provided to convert incident infrared radiation or visible light transmitted through the camera 12a, 12b into an electrical signal containing image information of the detected scene. The driver assisting system 10 may in particular be a night vision system.

The cameras 12a, 12b may be coupled to an image pre-processor 13 adapted to control the capture of images by the cameras 12a, 12b, warp pairs of left/right images into alignment and create disparity images, which per se is known in the art. The image pre-processor 13 may be realized by a dedicated hardware circuit. Alternatively the pre-processor 13, or part of its functions, can be realized in the processing means 14. The processing means 14 expediently has access to a memory means 15.

The pre-processed image data is then provided to a processing means 14 where further image and data processing is carried out by corresponding software. In particular, the image and data processing in the processing means 14 comprises the following functions: detection, identification and classification of possible objects in front of the motor vehicle, such as other motor vehicles, pedestrians, bicyclists or large animals, traffic signs; tracking over time the position of identified object candidates in the detected images; activation or control of vehicle safety means 17, 18, 19 ... depending on the result of the object detection and tracking processing. The vehicle safety means 17, 18, 19, ... may comprise a warning means 17 adapted to provide a collision warning to the driver by suitable optical, acoustical and/or haptical warning signals; display means 18 for displaying information relating to an identified object; one or more restraint systems 19 such as occupant airbags or safety belt tensioners; pedestrian airbags, hood lifters and the like; and/or dynamic vehicle control systems such as brakes.

The electronic processing means 14 is preferably programmed or programmable and may comprise a microprocessor or microcontroller. The image pre-processor 13, the electronic processing means 14 and the memory means 15 are preferably realized in an on-board electronic control unit (ECU) and may be connected to the cameras 12a, 12b and to the light source 20a, 20b preferably via a separate cable or alternatively via a vehicle data bus. The ECU may be integrated with other devices in another embodiment, such as an imaging means 11 or a light source 20a, 20b. All steps from imaging, image pre-processing, image processing to activation or control of safety means 17, 18, 19 ... are performed automatically and continuously during driving in real time.

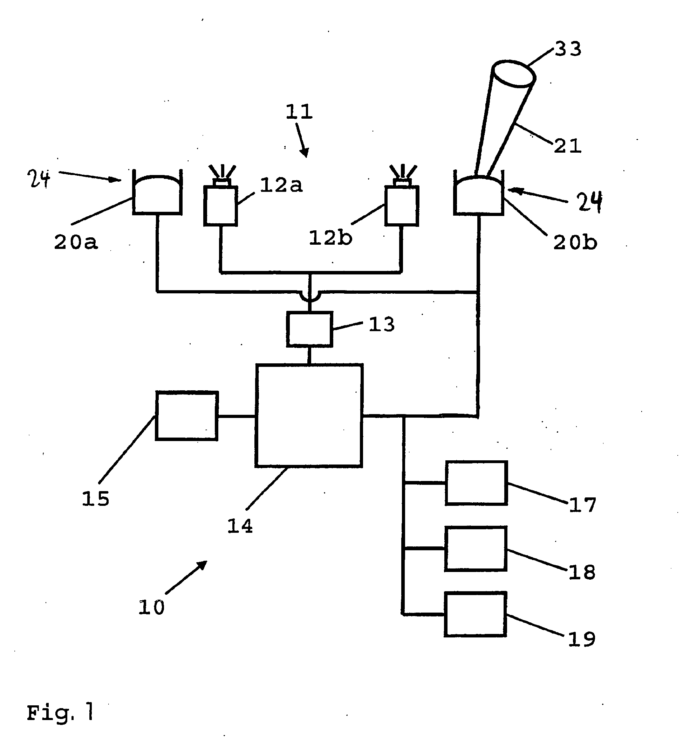

The driver assisting system 10 comprises a light source arrangement 24. In general, the light source arrangement 24 may comprise at least one visible light source and/or at least one infrared light source. In the Figures, the light source arrangement 24 comprises at least one light source 20a, 20b adapted to generate a visible light beam 21 in order to illuminate the vehicle environment. The light beam 21 generates a light figure 33, in particular a light spot, when falling on a surface of the environment, for example the road. The light sources 20a, 20b may in particular be the headlights of the vehicle; however, fog lights and/or separate search lights for example are also possible. In the embodiment of Fig. 1, the right head light 20b is electrically controllable by the processing means 14 to actively change the direction and/or shape of the light beam 21 in particular through an electric drive, like an electric motor. In another embodiment both headlights 20a, 20b may be controllable in this manner either synchronously or independent from each other.

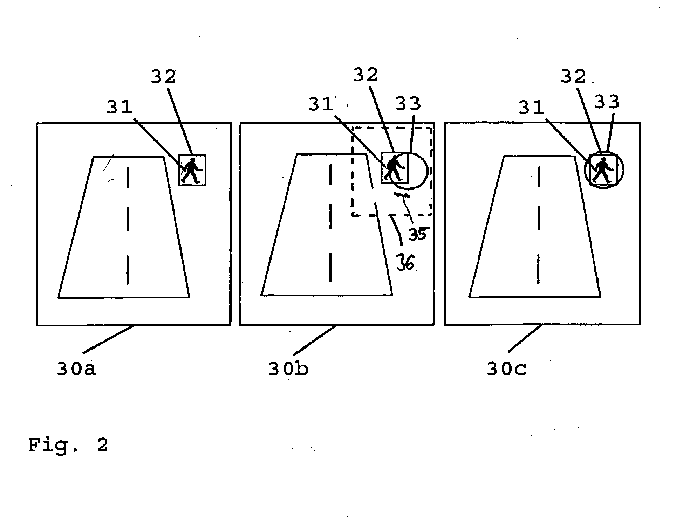

The offset determination an adjustment procedure is explained using the exemplary images 30a, 30b and 30c shown in Fig. 2.

Image 30a shows a scene in front of a motor vehicle, wherein a pedestrian 31 is detected by the processing means 14. The detection is indicated by an object bounding box 32.

When an object 31 is detected, the processing means 14 may control the light source 20b to change the direction and/or shape of the light beam 21 in order to continuously illuminate the detected object 31 during driving. In other words, the light source 20b is aligned to the expected direction of the detected object 31. This is done by using the position of the object bounding box 32 and taking into account speed, yaw, pitch and/or roll of the vehicle as measured by independent sensors, and a time delay between detection and directing the light beam on the detected object 31. This is shown in image 30b where the centre of the light figure 33 generated by the light beam 21 only approximately coincides with the centre of the bounding box 32. The directed illumination of the detected object 31 by the light beam 21 makes the driver aware of the detected object 31 and enables him to react properly.

Thus, the light source 20b is directed on basis of the position data provided by the imaging means 11. Furthermore the direction of the light source 20b may be compensated for the detected object's 31 trajectory, the vehicle velocity and/or the vehicle yaw-rate, pitch and/or roll. For different practical reasons, however, a perfect alignment between the light figure 33 and the object bounding box 32 is hard to achieve, and misalignments between the light figure 33 and the object bounding box 32 may occur, like it is shown in image 30b. In image 30b of Fig. 2 the light figure 33 generated by the light beam 21 is not accurately aligned with the detected object, in this case the detected pedestrian 31, leading to an offset 35 between the light figure 33 and the object bounding box 32.

The processing means 14 is adapted to detect the light figure 33 by image processing. This can be done for example by searching and fitting an oval light distribution with two independent standard deviations preferably within a well-defined region 36 around the object bounding box. Alternatively, the light distribution is searched for in the whole image and it is proved afterwards whether the distance between the determined light figure and the object bounding box lies within reasonable limits. Although a circular light distribution of the light figure 33 is shown in Fig. 2 for simplicity, the light distribution is generally oval or elliptical. The standard deviations in two perpendicular directions are preferably varied within reasonable limits. Alternatively, the standard deviations are arbitrarily varied and it is proved afterwards whether the determined standard deviations are within reasonable limits. It is also possible to have fixed standard deviations corresponding to expected extensions of the light figure 33.

When the light figure 33 originating from the light beam 21 has been found in the search region 36, the center point of the light figure 33 is determined and the offset 35 is calculated as the difference in x and y direction between the center point of the light figure 33 and center point of the object bounding box 32. In a subsequent step the processing means 14 controls the light source 20b to move towards the object bounding box 32 by an amount effectively bringing the offset 35 to zero. This ideal state where the light figure 33 exactly illuminates the detected object 31 continuously during driving is shown as image 30c in Figure 2.

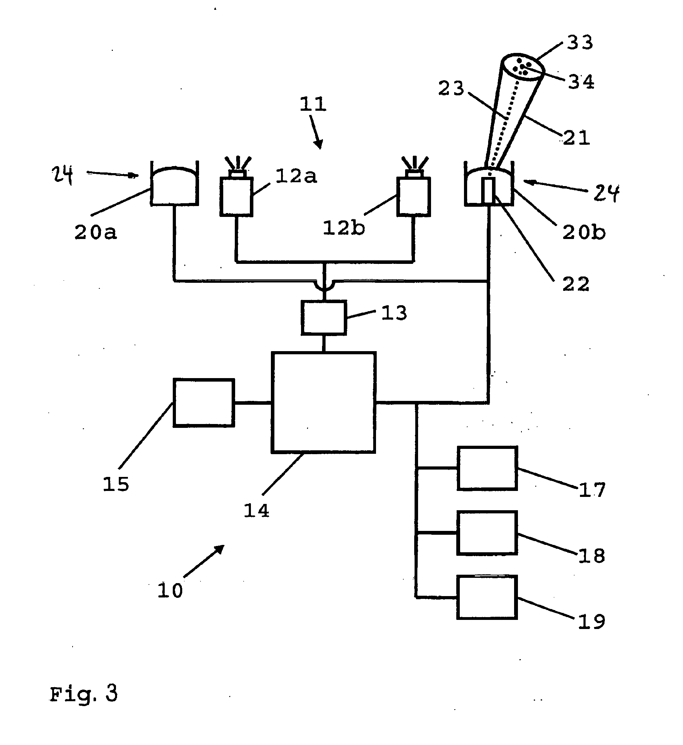

In another embodiment, shown in Fig. 3, an auxiliary light source 22 is provided which is electrically controllable by the processing means 14 to actively change the direction and/or shape of an auxiliary optical beam 23 in particular through an electric drive, like an electric motor. The auxiliary light source 22 may be arranged within a headlight 20, for example in the right headlight 20b as in Fig. 3, but this is not necessarily the case. Furthermore, a plurality of auxiliary light sources 22 may be provided, for example an auxiliary light source 22 for each headlight 20. The light source 22 may comprise at least one laser. Preferably the auxiliary light source 22 generates an optical beam 23. The optical beam 23 generates an optical figure 34 when falling on a surface of the environment, for example the road. Preferably the optical beam 23 essentially lies outside the visible spectrum such that the optical beam 23 and the optical figure 34 do not irritate the driver. In a preferred embodiment the auxiliary light source 22 is an infrared light source, comprising for example at least one infrared laser.

The auxiliary optical figure 34 generated by the auxiliary light source 22 is detectable by the imaging means 11 after the optical beam 23 has been directed to the reference position. The auxiliary light source 22 can be specifically adapted to generate a smaller and brighter optical figure 34 having a characteristic pattern which makes it much easier detectable as compared to the light figure 33 of the headlight 20b. Consequently the optical figure 34 generated by the auxiliary light source 22 is used for the determination of the offset 35 instead of the light figure 33 generated by the head light 20b. It is possible, however, to use the detection of the light figure 33 and the detection of the auxiliary optical figure 34 in combination. For example, the detection of the light figure 33 may be used as a confirmation of a detection of the optical figure 34. In summary, by using an auxiliary light source 22 the reliability of the system 10 can be enhanced.

The auxiliary optical figure 34 preferably has a characteristic pattern, for example a spot, a line, a circle, a cross and/or a plurality of these in an arbitrary combination and/or arrangement such that the auxiliary optical figure 34 can be unambiguously assigned as generated by the auxiliary light source 22 in the manner of a "fingerprint".

The auxiliary light source 22 may be mechanically or electrically coupled to the head light 20b such that both light beams 21, 23 can be moved synchronously. In the case of a mechanical coupling one electric drive may be sufficient to change the direction and/or shape of both beams 21, 23.

However, the auxiliary light source 22 and the head light 20b may also be adjustable independent from each other, in particular through individual electric drives. In such an embodiment the auxiliary light source 22 may be used "in the background" to calibrate the system 10 without the driver noticing it, where the offsets 35 determined by the auxiliary light source 22 are used to adjust the head light 20b exactly to a detected object 31 only if necessary, in particular if a certain risk of collision with the detected object 31 is determined.

## Claims

1. A driver assisting system (10) for a motor vehicle, comprising an imaging means (11) adapted to capture images from a region surrounding the motor vehicle, a processing means (14) adapted to process image data provided by said imaging means (11) and to detect objects in said vehicle surrounding region, and a light source arrangement (24) comprising a light source (20b; 22) for generating an optical figure (33; 34) in the vehicle surrounding region through a light beam (21; 23) and being controllable by said processing means (14) to change the direction and/or shape of said light beam (21; 23), **characterized in that** said processing means (14) is adapted to control said light source (20b; 22) to illuminate a reference position in said vehicle environment based on said image processing, to detect in the acquired images said optical figure (33; 34) generated by said light source (20b; 22), wherein the processing means (14) is adapted to search for said optical figure (33; 34) only within a predetermined region (36) around said reference position in the captured images, and to determine an offset (35) between the position of said optical figure (33; 34) and said reference position, wherein said reference position is related to the position of a detected object (31).

2. The driver assisting system (10) according to claim 1, wherein said processing means (14) is adapted to find a modeled light distribution of said optical figure (33; 34) in the acquired images.

3. The driver assisting system (10) according to claim 2, wherein said modeled light distribution is two-dimensional.

4. The driver assisting system (10) according to claim 3, wherein said modeled light distribution has independent standard deviations in two perpendicular directions.

5. The driver assisting system (10) according to any one of the preceding claims, wherein said processing means (14) is adapted to perform a verification that a determined optical figure (33; 34) originates from said light source (20b; 22).

6. The driver assisting system (10) according to any one of the preceding claims, wherein said processing means (14) is adapted to extract characteristic properties of said determined optical figure (33; 34)

7. The driver assisting system (10) according to claim 6, wherein said processing means (14) is adapted to prove whether said extracted characteristic properties fulfill predetermined conditions.

8. The driver assisting system (10) according to claim 6 or 7, wherein said characteristic properties comprise at least one spatial property of said optical figure (33; 34).

9. The driver assisting system (10) according to any one of the preceding claims, wherein said processing means (14) is adapted to control said light source (20b; 22) in order to impose a temporal variation and/or a characteristic movement of said light beam (21; 23).

10. The driver assisting system (10) according to claim 9, wherein said processing means (14) is adapted to recognize said temporal variation and/or said characteristic movement in a detected optical figure (33, 34).

11. The driver assisting system (10) according to any one of the preceding claims, wherein a compensation of the vehicle motion and/or a predicted object motion is taken into account prior to the determination of said offset (35).

12. The driver assisting system (10) according to any one of the preceding claims, wherein vehicle yaw-rate and/or vehicle speed is used for compensating vehicle motion.

13. A driver assisting method for a motor vehicle comprising capturing images from a region surrounding the motor vehicle, detecting objects in said vehicle surrounding region by image processing of captured image data, and generating an optical figure (33; 34) in the vehicle surrounding region through a light beam (21; 23) by a light source (20b; 22) controllable to change the direction and/or shape of said light beam (21; 23), **characterized by** controlling said light source (20b; 22) to illuminate a reference position in said vehicle environment based on said image processing, detecting in the acquired images said optical figure (33; 34) generated by said light source (20b; 22), wherein said optical figure (33; 34) is searched for only within a predetermined region (36) around said reference position in the captured images, and determining an offset (35) between the position of said optical figure (33; 34) and said reference position, wherein said reference position is related to the position of a detected object (31).

## Patentansprüche

1. Fahrerassistenzsystem (10) für ein Kraftfahrzeug, umfassend ein Abbildungsmittel (11), welches dafür geeignet ist, Bllder von einem Bereich aufzunehmen, der das Kraftfahrzeug umgibt, ein Verarbeitungsmittel (14), welches dafür geeignet ist, Bilddaten zu verarbeiten, die von dem Abbildungsmittel (11) bereitgestellt werden, und Objekte in dem Bereich zu erfassen, der das Fahrzeug umgibt, und eine Lichtquellenanordnung (24), welche eine Lichtquelle (20b, 22) zum Erzeugen einer optischen Figur (33; 34) in dem Bereich, der das Fahrzeug umgibt, durch einen Lichtstrahl (21; 23) umfasst und welche durch das Verarbeitungsmittel (14) steuerbar ist, die Richtung und/oder Form des Lichtstrahls (21; 23) zu ändern, **dadurch gekennzeichnet, dass** das Verarbeitungsmittel (14) dafür geeignet ist, die Lichtquelle (20b, 22) zu steuern, eine Vergleichsposition in der Fahrzeugumgebung auf der Grundlage der Bildverarbeitung zu beleuchten, in den erhaltenen Bildern die von der Lichtquelle (20b; 22) erzeugte optische Figur (33; 34) zu erfassen, wobei das Verarbeitungsmittel (14) dafür geeignet ist, nur innerhalb eines vorgegebenen Bereichs (36) um die Vergleichsposition herum in den aufgenommenen Bildern nach der optischen Figur (33; 34) zu suchen und eine Abweichung (35) zwischen der Position der optischen Figur (33; 34) und der Vergleichsposition zu bestimmen, wobei die Vergleichsposition auf die Position eines erfassten Objekts (31) bezogen ist.

2. Fahrerassistenzsystem (10) nach Anspruch 1, wobei das Verarbeitungsmittel (14) dafür geeignet ist, eine modellierte Lichtverteilung der optischen Figur (33; 34) in den erhaltenen Bildern zu finden.

3. Fahrerassistenzsystem (10) nach Anspruch 2, wobei die modellierte Lichtverteilung zweidimensional ist.

4. Fahrerassistenzsystem (10) nach Anspruch 3, wobei die modellierte Lichtverteilung unabhängige Standardabweichungen in zwei senkrechten Richtungen aufweist.

5. Fahrerassistenzsystem (10) nach einem der vorhergehenden Ansprüche, wobei das Verarbeitungsmittel (14) dafür geeignet ist, eine Verifizierung durchzuführen, dass eine bestimmte optische Figur (33; 34) von der Lichtquelle (20b; 22) stammt.

6. Fahrerassistenzsystem (10) nach einem der vorhergehenden Ansprüche, wobei das Verarbeitungsmittel (14) dafür geeignet ist, charakteristische Eigenschaften der bestimmten optischen Figur (33; 34) zu extrahieren.

7. Fahrerassistenzsystem (10) nach Anspruch 6, wobei das Verarbeitungsmittel (14) dafür geeignet ist, zu überprüfen, ob die extrahierten charakteristischen Eigenschaften vorgegebene Bedingungen erfüllen.

8. Fahrerassistenzsystem (10) nach Anspruch 6 oder 7, wobei die charakteristischen Eigenschaften mindestens eine räumliche Eigenschaft der optischen Figur (33; 34) umfassen.

9. Fahrerassistenzsystem (10) nach einem der vorhergehenden Ansprüche, wobei das Verarbeitungsmittel (14) dafür geeignet ist, die Lichtquelle (20b; 22) zu steuern, um eine zeitliche Variation und/oder eine charakteristische Bewegung des Lichtstrahls (21; 23) zu bewirken.

10. Fahrerassistenzsystem (10) nach Anspruch 9, wobei das Verarbeitungsmittel (14) dafür geeignet ist, die zeitliche Variation und/oder die charakteristische Bewegung in einer erfassten optischen Figur (33, 34) zu erkennen.

11. Fahrerassistenzsystem (10) nach einem der vorhergehenden Ansprüche, wobei vor dem Bestimmen der Variation (35) ein Ausgleich der Fahrzeugbewegung und/oder eine vorhergesagte Objektbewegung berücksichtigt wird.

12. Fahrerassistenzsystem (10) nach einem der vorhergehenden Ansprüche, wobei zum Ausgleichen der Fahrzeugbewegung die Giergeschwindigkeit des Fahrzeugs und/oder die Fahrzeuggeschwindigkeit verwendet wird.

13. Fahrerassistenzverfahren für ein Kraftfahrzeug, umfassend Aufnehmen von Bildern von einem Bereich, der das Kraftfahrzeug umgibt, Erfassen von Objekten in dem Bereich, der das Kraftfahrzeug umgibt, durch ildverarbeitung aufgenommener Bilddaten und Erzeugen einer optischen Figur (33; 34) in dem Bereich, der das Fahrzeug umgibt, durch einen Lichtstrahl (21; 23) von einer Lichtquelle (20b; 22), die steuerbar ist, die Richtung und/oder Form des Lichtstrahls (21; 23) zu ändern, e**kennzeichnet durch** Steuern der Lichtquelle (20b; 22), eine Vergleichsposition in dem Bereich der Fahrzeugumgebung auf der Grundlage der ildverarbeitung zu beleuchten, Erfassen der **durch** die Lichtquelle (20b; 22) erzeugten optischen Figur (33; 34) in den erhaltenen Bildern, wobei nur innerhalb eines vorgegebenen Bereichs (36) um die Vergleichsposition herum in den aufgenommenen Bildern nach der optischen Figur (33; 34) gesucht wird, und Bestimmen einer Abweichung (35) zwischen der Position der optischen Figur (33; 34) und der Vergleichsposition, wobei die Vergleichsposition auf die Position eines erfassten Objekts (31) bezogen ist.

## Revendications

1. Système d'assistance au conducteur (10) d'un véhicule à moteur, comprenant un moyen d'imagerie (11) adapté pour acquérir des images d'une zone entourant le véhicule à moteur, un moyen de traitement (14) adapté pour traiter les données d'images fournies par ledit moyen d'imagerie (11) et pour détecter des objets dans ladite zone entourant le véhicule, et un agencement de source lumineuse (24) comprenant une source lumineuse (20b ; 22) qui sert à générer une figure optique (33 ; 34) dans la zone entourant le véhicule au moyen d'un faisceau lumineux (21 ; 23) et qui peut être commandée par ledit moyen de traitement (14) afin de modifier la direction et/ou la forme dudit faisceau lumineux (21 ; 23), **caractérisé en ce que** ledit moyen de traitement (14) est adapté pour commander ladite source lumineuse (20b ; 22) de façon qu'elle éclaire une position de référence dans ledit environnement du véhicule sur la base dudit traitement d'images, pour détecter dans les images acquises ladite figure optique (33 ; 34) générée par ladite source lumineuse (20b ; 22), le moyen de traitement (14) étant adapté pour rechercher ladite figure optique (33 ; 34) uniquement à l'intérieur d'une zone (36) prédéterminée autour de ladite position de référence dans les images acquises, et pour déterminer un décalage (35) entre la position de ladite figure optique (33 ; 34) et ladite position de référence, ladite position de référence étant liée à la position d'un objet (31) détecté.

2. Système d'assistance au conducteur (10) selon la revendication 1, dans lequel ledit moyen de traitement (14) est adapté pour trouver une distribution modélisée de la lumière de ladite figure optique (33 ; 34) dans les images acquises.

3. Système d'assistance au conducteur (10) selon la revendication 2, dans lequel ladite distribution modélisée de la lumière est bidimensionnelle.

4. Système d'assistance au conducteur (10) selon la revendication 3, dans lequel ladite distribution modélisée de la lumière possède des écarts types indépendants dans deux directions perpendiculaires.

5. Système d'assistance au conducteur (10) selon l'une quelconque des revendications précédentes, dans lequel ledit moyen de traitement (14) est adapté pour vérifier qu'une figure optique (33 ; 34) déterminée provient de ladite source lumineuse (20b ; 22).

6. Système d'assistance au conducteur (10) selon l'une quelconque des revendications précédentes, dans lequel ledit moyen de traitement (14) est adapté pour extraire des propriétés caractéristiques de ladite figure optique (33 ; 34) déterminée.

7. Système d'assistance au conducteur (10) selon la revendication 6, dans lequel ledit moyen de traitement (14) est adapté pour établir si lesdites propriétés caractéristiques extraites satisfont des conditions prédéterminées.

8. Système d'assistance au conducteur (10) selon la revendication 6 ou la revendication 7, dans lequel lesdites propriétés caractéristiques comprennent au moins une propriété spatiale de ladite figure optique (33 ; 34).

9. Système d'assistance au conducteur (10) selon l'une quelconque des revendications précédentes, dans lequel ledit moyen de traitement (14) est adapté pour commander ladite source lumineuse (20b ; 22) de façon à imposer une variation temporelle et/ou un mouvement caractéristique dudit faisceau lumineux (21 ; 23).

10. Système d'assistance au conducteur (10) selon la revendication 9, dans lequel ledit moyen de traitement (14) est adapté pour reconnaître ladite variation temporelle et/ou ledit mouvement caractéristique dans une figure optique (33, 34) détectée.

11. Système d'assistance au conducteur (10) selon l'une quelconque des revendications précédentes, dans lequel une compensation du déplacement du véhicule et/ou d'un déplacement prédit de l'objet est prise en compte avant la détermination dudit décalage (35).

12. Système d'assistance au conducteur (10) selon l'une quelconque des revendications précédentes, dans lequel la vitesse de lacet et/ou la vitesse d'avance du véhicule est utilisée pour compenser le déplacement du véhicule.

13. Procédé d'assistance au conducteur d'un véhicule à moteur, comprenant l'acquisition d'images d'une zone entourant le véhicule à moteur, la détection d'objets dans ladite zone entourant le véhicule par un traitement d'images des données d'images acquises, et la génération d'une figure optique (33 ; 34) dans la zone entourant le véhicule au moyen d'un faisceau lumineux (21 ; 23) émis par une source lumineuse (20b ; 22) qui peut être commandée de façon à modifier la direction et/ou la forme dudit faisceau lumineux (21 ; 23), **caractérisé en ce que** ladite source lumineuse (20b ; 22) est commandée de façon à éclairer une position de référence dans ledit environnement du véhicule sur la base dudit traitement d'images, ladite figure optique (33 ; 34) générée par ladite source lumineuse (20b ; 22) est détectée dans les images acquises, ladite figure optique (33 ; 34) étant recherchée uniquement à l'intérieur d'une zone (36) prédéterminée autour de ladite position de référence dans les images acquises, et un décalage (35) est déterminé entre la position de ladite figure optique (33 ; 34) et ladite position de référence, ladite position de référence étant liée à la position d'un objet (31 ) détecté.
